# EUROPEAN PATENT APPLICATION

(11) **EP 1 808 809 A1**
(43) Date of publication of application: **18.07.2007**
(21) Application number: 06000759.8
(22) Date of filing: 13.01.2006
(51) Int. Cl.: G06Q 40/00

(54) **Debt instrument with interest payments derived from the revenue generated by a certain intellectual property right**

(71) Applicant: Green, Kieran, Barnoldswick Lancashire BB18 6YW (GB)
(72) Inventor: Green, Kieran, Barnoldswick Lancashire BB18 6YW (GB)

(57) **Abstract**

New companies with a high proportion of intangible assets, no history and no turnover pay a comparatively high equivalent cost of capital. Sub-optimal risk sharing in the earl stages of a new firm's life contributes to the benefits of scientific endeavour not being fully realised. Therefore, there is need for a system by which increased competition amongst potential investors for a share in a new company' good fortune reduces the effective cost of capital.

This invention relates to the field of Financial Securities. Specifically, the disclosure relates to a debt instrument providing interest payments derived from the revenues generated by the relevant intellectual property right. Companies can therefore leverage the value of their intellectual property rights by selling the described debt instrument to investors through a competent underwriter.

## Description

### Technical Field to which Invention Relates

This invention relates to the field of Financial Securities. Specifically, the disclosure relates to a debt instrument providing interest payments derived from the revenues generated by the relevant intellectual property right.

### Relevant Prior Art

New companies with a high proportion of intangible assets, no history and no turnover pay a comparatively large equivalent cost of capital. Sub-optimal risk sharing in the early stages of a new firm's life contributes to the benefits of scientific endeavour not being fully revised. Therefore, there is need for a system by which increased competition amongst potential investors for a share in a company's good fortune reduces the effective cost of capital.

Maximising profits generated after commercial application of new knowledge is crucial for the sustained economic growth of economies predominantly producing services and low-volume/ high-tech products. As economies move from mass production and users of raw materials to service providers and producers of high-tech goods, knowledge becomes more valuable. This is characterised by the change in the composition of leading companies' balance sheet values over the past 25 or so years, from being composed in the main of physical assets to now being composed predominantly of intangible assets. This change in the fundaments of value creation in modern economies was noticed early by the academic community, with perhaps Kaplan and Johnson being some of the more prominent initial observers after the publication of their 1987 book, Relevance Lost, The Rise and Fall of Management Accounting (Harvard Business School Press). The authors pointed out that traditional accounting methods no longer produce sufficient information on the wealth production and growth of companies due to the increasing amount of value locked up in intangible assets and *good faith* that is not defined on financial statements. Another prominent observer of the changing fundaments of current and future wealth creation was Karl-Erik Sveiby, who in his 1986 book with Anders Risling, The Know-How Company (Liber), introduced the concept of knowledge management. Since the eighties, academic work in the field of knowledge management has been intense, so much so that policy makers now place great emphasis on the importance of the Knowledge Economy. Nowhere is this more conspicuous than in the EU's year 2000 Lisbon Agenda, in which heads of state agreed to make the EU, 'the most competitive and dynamic knowledge-driven economy by 2010.'

Developing and bringing to market new technology is important for sustained economic growth. Nevertheless, modern economies are far from good at doing this, and a great deal of potential value is never realised, Why and how markets for new knowledge fail or are sub-optimal is a great focus of contemporary academic investigation and theories are well developed. An understanding of the failure of markets for new technology and the need for the invention described here, therefore, necessitates definition of the actors and routes involved in the commercialisation of new technologies.

Inventing, financing and marketing new technologies can rarely be done by a single individual. Immediately therefore, conflicts of interest are generated between the individuals that have come together to exploit a new technology: who owns the knowledge; how are other entities stopped from using the new knowledge; how much should providers of capital and business acumen benefit from the time and effort invested in the development of the new technology. Modem intellectual property rights go a long way to solve the problems of ownership and monopolistic use of a new technology. Nevertheless, the road to market following designation of ownership is far from smooth. New companies, with few assets and little or no history upon which to judge them cannot approach capital markets and commercial bank-loans are usually far too expensive. Venture capital is therefore often the only option, with VCs providing capital and sometimes the much required business acumen. A VC company will buy a certain amount of equity from the company requiring funding with a hope of selling that equity for as much as possible in the near future; indeed, no VC will invest without a clearly defined exist strategy. As inferred to above, conflicts of interest arise: inventors worry they are not maximising their profits; non-VC company directors worry the VC's exist strategy is selfish and more beneficial for them than the new company? Furthermore, VCs expect a high return on their capital. Investing in new companies is obviously very risky and a VC that invested all its capital in one venture would he short lived: entrepreneurs therefore, often pay a huge cost for the investment of capital by VCs. Nevertheless, with the recent proliferation of funds under management by VCs, diversification of investments by VCs and investments in single projects being made by consortia of VCs have dramatically reduced the risks to these private investors. Competition between VCs is very though, and market forces are yet to pass on this reduction in risk for VCs onto entrepreneurs as a reduced equivalent cost of capital.

A lower equilibrium cost of risk capital to entrepreneurs would be achieved if there was higher competition between potential investors. A company with a reputable history and promising future is able minimise its cost of capital by issuing tradable securities-either debt or rights to ownership. This way, costs of capital are kept down through investors competing amongst themselves for the opportunity to share a company's future good fortune. Nonetheless, a newly incorporated company with no history and no turnover does not have this opportunity.

One the other-hand, intellectual property rights are assets that will provide future revenue streams. Despite this, historically investors have either not had the chance to speculate on intellectual property or have been unwilling to consider them. In the past, company's were not required to break down the value of their intangible assets from a tax law perspective; nor is there any significant benefit of disclosing to competitors or investors either the cost of development or the perceived market value of a certain piece of intellectual property. Investors on the other hand may previously have not been able to confidently value a piece of intellectual property: neither its market value nor its cost of development.

Accounting for intangible assets by companies has recently been changed with the Financial Accounting Standards Board 2004 pronouncements on Business Combinations (Statement No. 141, Business Combinations) and Goodwill and Intangible Assets (Statement No. 142, Goodwill and Other Intangible Assets) and the 2004 issues by the International Accounting Standards Board in Business Combinations (1FRS 3) and intangible Assets (IAS 38). Fundamentally, these changes have taken place to allow better assessment of a company's wealth production, being enshrined in changing generally accepted accounting practices and tax-law. Nonetheless, these changes are yet to benefit companies-especially new companies with no history-in the form of a lower cost of capital.

### Technical Problem to be Solved

The current invention as disclosed allows companies to leverage the value of their intellectual property rights. Furthermore, the current invention as disclosed allows new companies-potentially with no history and no turnover-to reduce their cost of capital by creating higher competition amongst investors for the right to share in the future success of the commercial exploitation of a certain piece of intellectual property.

### Disclosure of Invention

The current invention is a debt instrument with the value of a certain intellectual property right as the underlying asset. The total value of the debt issuance using the method disclosed here is the cost of developing the intellectual property or fair market value or any combination thereof. Market forces will define the exact amount, for whilst underwriters wish to maximise their profit they must also generate enough interest from the investor community.

The value of regular interest payments made to owners of certain individual instruments is set at a predetermined percentage of all revenues generated by utilising the particular intellectual property right underlying that certain individual instrument.

The debt instrument will mature when the protection conferred by an intellectual property right over a proprietary piece of knowledge expires or at any predetermined time before that date. At maturity, investors are repaid the initial principal.

### Description of Implementing Invention

Companies can leverage the value of their intellectual property rights by selling the described debt instrument to investors through a competent underwriter.

The underwriter and proprietary intellectual property right owner are to determine together the percentage of the revenues generated by the applicable intellectual property right that will be paid to investors as an interest payment.

For example:

| | | |
|---|---|---|
| • Total value of bond issuance | = | €17M |
| • Predicted value of all revenues generated over life-time of intellectual property right (**1**) | = | €2 070M |
| • Life-time of bond | = | 20 years |
| • Net present value of revenues (**2**) (4% discount factor) | = | €1456M |
| • Annual returns required by investors | = | 20% |
| • Percentage of revenue to be issued to investors as interest (**3**) | = | ((€17M x 1.2) /€1 456M)x 100 |
| | = | 1.4% |

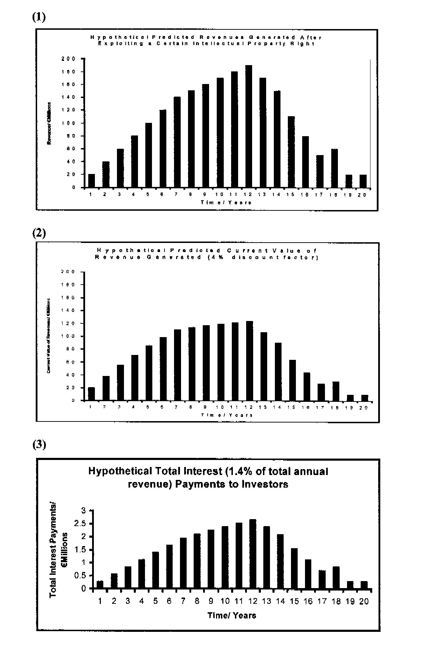

## Claims

1. A financial product comprising a debt instrument **characterised by**: a debt security to be issued by owners of a certain intellectual property right and equal in value to that specific intellectual property right; providing a regular interest income to investors at predefined dates derived from incomes received by the owners after utilising the underlying intellectual property right, and; providing a final repayment of the principle amount at a predefined maturity date.

2. Any debt instrument according to claim 1. **characterised in that** the total amount of debt sold via a certain issuance being equal to either the cost of development of that certain intellectual property right or the fair market value of that certain intellectual property right or any combination thereof.

3. Any debt instrument according to claim 1. **characterised in that** the issue of the debt instrument can take place at any time after protection is conferred by an intellectual property right upon the certain piece of knowledge underlying the debt instrument.

4. Any debt instrument according to claim 1. **characterised in that** there will be regular interest or coupon payments made at a value equal to a predefined percentage of revenues in any accounting form generated by the owners of the underlying intellectual property right through products, services or licensing agreements utilising in any way the intellectual property right that underlies the individual instrument as sold.

5. Any debt instrument according to claim 1. **characterised in that** the final repayment of the principal amount takes place at a predefined date anytime before, at or after the expiry date of the protection conferred upon the particular proprietary knowledge by the intellectual property right in question.
